# FASCICULE DE BREVET EUROPEEN

(11) **EP 1 631 444 B1**
(45) Date de publication et mention de la délivrance du brevet: **26.03.2008**
(21) Numéro de dépôt: 04767298.5
(22) Date de dépôt: 09.06.2004
(51) Int. Cl.: B29D 11/00

(54) **DISPOSITIF A SUPPORTS ARTICULES POUR LE MOULAGE D'UNE LENTILLE OPTIQUE, EN PARTICULIER UNE LENTILLE OPHTALMIQUE ET PROCÉDÉ POUR SA UTILISATION**
MIT SCHWENKBAREN STÜTZEN VERSEHENE VORRICHTUNG ZUM FORMEN EINER OPTISCHEN LINSE, INSBESONDERE EINER OPHTHALMISCHEN LINSE UND VERFAHREN ZUR DEREN BENUTZUNG
DEVICE PROVIDED WITH PIVOTABLE SUPPORTS FOR MOULDING AN OPTICAL LENS, IN PARTICULAR AN OPHTHALMIC LENS AND METHOD FOR ITS USE

(30) Priorité: 11.06.2003 FR 0306988
(43) Date de publication de la demande: 08.03.2006
(73) Titulaire: ESSILOR INTERNATIONAL (Compagnie Générale d'Optique), F-94220 Charenton-le-Pont (FR)
(72) Inventeur: FRESON, David, F-80200 Estrees-Deniecourt (FR); CAILLOUX, Jean-François, F-77600 Bussy-Saint-Georges (FR)
(74) Mandataire: Lepelletier-Beaufond, François
(86) Numéro de dépôt international: PCT/FR2004/001432
(87) Numéro de publication internationale: WO 2004/110730

(56) Documents cités:
- EP-A- 0 941 829
- DE-A- 2 455 888
- GB-A- 847 797
- US-A- 4 474 355

## Description

L'invention a trait au domaine de la fabrication des lentilles optiques, en particulier des lentilles ophtalmiques destinées à former des verres de lunettes.

L'invention concerne plus particulièrement un dispositif pour l'obtention d'une telle lentille optique à partir d'une matière polymérisable, ce dispositif comportant des coquilles de moulage.

On sait que les opérations de moulage de telles lentilles nécessitent un positionnement précis de deux coquilles l'une par rapport à l'autre, ce qui conduit à l'emploi, dans les dispositifs de moulage connus, de moyens de jonction entre les coquilles. De plus, ces moyens de jonction sont prévus pour permettre les différentes opérations de mise en place des coquilles, de remplissage du moule ainsi formé, et de déchargement de la lentille une fois moulée.

On connaît ainsi du document US 4 474 355 un dispositif et un procédé de moulage d'une lentille ophtalmique, dans lesquels sont employés deux coquilles ainsi qu'un support pour les deux coquilles qui permet de les disposer à plat à distance l'une de l'autre pour former un moule.

Ce support comporte, pour mettre en position les coquilles, une série d'épaulements pour chaque coquille, chaque épaulement étant ménagé dans un montant faisant saillie à partir d'un socle annulaire.

Le support annulaire n'assure qu'une fonction de maintien des coquilles. Pour amener les coquilles dans une position de moulage et pour évacuer la lentille une fois moulée, il est nécessaire de manipuler les coquilles directement par des moyens adaptés, extérieurs au dispositif.

Par ailleurs, le document DE 2 455 888 décrit un dispositif comportant d'eux jeux de coquilles, chaque jeu comportant une pluralité de coquilles côte à côte reliées entre elles, ces deux jeux de coquilles étant adaptés à être superposés de sorte que les coquilles coopèrent deux à deux, chacune en vis-à-vis d'une autre pour former une cavité de moulage.

De même que précédemment, le dispositif décrit nécessite une manipulation directe des coquilles pour les mettre en position. Seule une position de moulage est prévue, position dans laquelle le jeu de coquilles inférieur repose sur un support par l'intermédiaire de pieds saillants et le jeu de coquilles supérieur est clipsé sur le jeu inférieur, la matière polymérisable ayant été déposée au préalable dans les coquilles inférieures. EP A-941 829 et GB A-847 797 décrivent les dispositif pour le moulage de lentilles.

L'invention vise un dispositif de moulage adapté à l'emploi de jeux de coquilles amovibles et prévu pour faciliter les opérations de chargement et de déchargement des coquilles, de sorte à être intégrable dans un environnement de production à fortes cadences tout en restant flexible.

A cet effet, l'invention a pour objet un dispositif pour l'obtention d'une lentille optique , selon la revendication 1 et un procédé selon la revendication 17.

Le dispositif de moulage selon l'invention met en oeuvre des porte-coquilles et des supports articulés permettant deux niveaux de mise en position des coquilles : d'une part, les supports sont mis en position l'un par rapport à l'autre et, d'autre part, les porte-coquilles sont chacun mis en position respectivement par rapport à l'un des supports.

L'ensemble formé par les supports articulés l'un a l'autre a pour fonction d'assurer une mise en position précise des supports dans leur position superposée et, indépendamment, le rôle des porte-coquilles est d'assurer une mise en position précise de chaque coquille par rapport à son support respectif.

Cet arrangement permet d'amples mouvements relatifs des deux supports, sans influencer sur la précision de la mise en position des porte-coquilles (et donc des coquilles) l'un par rapport à l'autre puisque ces derniers assurent leur position relative à partir d'une position précise des supports (la première position relative où ils sont superposés).

Les mouvements permis entre les deux supports permettent au dispositif selon l'invention d'être modulable et d'adopter de multiples configurations facilitant le chargement et le déchargement des coquilles et de la matière, ainsi que le moulage proprement dit.

Ladite orientation prédéterminée peut de plus être une orientation à plat, le dispositif selon l'invention étant alors adapté à un moulage à plat, éventuellement en déposant la matière par gravité.

Par ailleurs, pour que les porte-coquilles soient avantageusement accessibles indépendamment l'un de l'autre, le premier support et le deuxième support peuvent être disposés à l'opposé l'un de l'autre dans ladite deuxième position relative.

De même, le dispositif peut admettre une configuration ouverte où le premier support et le deuxième support sont dans ladite deuxième position relative et sont chacun à plat ; et éventuellement, les faces respectivement du premier support et du deuxième support qui se font face dans ladite première position relative, peuvent de plus regarder chacune vers le haut dans ladite configuration ouverte.

Ces positions mutuelles possibles des supports permettent de disposer d'un dispositif réversible, chaque face de chaque support pouvant être accessible par le dessus, en fonction de la position mutuelle choisie.

Selon une caractéristique de l'invention, le dispositif admet une première configuration où le premier support et le deuxième support sont dans ladite première position relative et sont chacun orientés à plat avec le premier support qui est au-dessus du deuxième support ; et admet une deuxième configuration où le premier support et le deuxième support sont dans ladite première position relative et sont chacun orientés à plat avec le deuxième support qui est situé au-dessus du premier support.

En plus de l'accessibilité individuelle des coquilles, le retournement du dispositif, maintenu dans la première position relative des supports, est ici rendu possible.

Pour des raisons de commodité et pour assurer un positionnement mutuel précis des supports :
- le premier support et le deuxième support peuvent présenter chacun une surface de référence, lesdites surfaces de référence étant disposées l'une contre l'autre lorsque le premier support et le deuxième support sont l'un contre l'autre, dans ladite première position relative ; et/ou
- le premier support et le deuxième support peuvent être reliés par une charnière.

Selon une caractéristique préférée, le dispositif selon l'invention comporte en outre deux roues perpendiculaires à l'axe d'articulation des deux supports et situées chacune de part et d'autre de cette articulation de sorte que l'axe de chacune des roues coïncide avec ledit axe d'articulation des deux supports, une première de ces roues étant liée en rotation avec le premier support et une deuxième de ces roues étant liée en rotation avec le deuxième support, de manière que la rotation de la première roue entraîne un pivotement du premier support relativement au deuxième support et que la rotation de la deuxième roue entraîne un pivotement du deuxième support relativement au premier support.

De plus, lesdites roues peuvent être des roues dentées aptes à être entraînées chacune en rotation par un pignon relié à un moteur ou une crémaillère reliée à un vérin.

Le pivotement de chaque support étant ainsi commandé par des roues, il est possible d'en automatiser et d'en séquencer les mouvements mutuels nécessaires pour une opération de moulage.

Par ailleurs, pour permettre le réglage de l'épaisseur à mouler, le premier porte-coquille peut coopérer à coulissement avec le premier support pour permettre, lorsque la première coquille et la deuxième coquille sont dans ladite position de moulage, un mouvement d'éloignement ou de rapprochement mutuel de la première coquille et de la deuxième coquille

De plus, le coulissement du premier porte-coquille par rapport au premier support peut être commandé par un vérin asservi, ledit vérin permettant en outre d'immobiliser le premier porte-coquille relativement au premier support à l'exception d'un mouvement de rapprochement entre le premier porte-coquille et le deuxième porte coquille

Le recours à un vérin asservi permet le réglage précis de l'épaisseur à mouler et l'automatisation des tâches. La possibilité d'immobiliser le premier porte-coquille à l'exception d'un mouvement de rapprochement du deuxième porte-coquille permet quant à elle d'autoriser exclusivement un mouvement de rapprochement des deux coquilles. Cette propriété est avantageuse, pendant la phase de polymérisation de la matière, pour permettre à la première coquille d'accompagner le retrait de la matière et éviter ainsi à la matière de se décoller d'une des coquilles.

Le deuxième porte-coquille peut également être mobile en rotation par rapport au deuxième support.

Cette caractéristique permet d'utiliser des coquilles destinées au moulage de verres corrigeant l'astigmatisme, ces coquilles nécessitant un réglage de leur position angulaire avant moulage.

Selon une caractéristique préférée, ladite position prédéterminée de la première coquille par rapport au premier porte-coquille est définie par un siège annulaire adapté à caler la première coquille selon deux directions orthogonales. De plus, le premier porte-coquille peut comporter au moins un vérin adapté à maintenir la première coquille contre ledit siège annulaire.

Le siège annulaire et le vérin de verrouillage garantissent une mise en position optimale de la première coquille par rapport au premier porte-coquille.

Selon une autre caractéristique préférée, ladite position prédéterminée de la deuxième coquille par rapport au deuxième porte-coquille est définie par un jeu de mors concentriques adaptés au serrage de la deuxième coquille par sa circonférence. De plus, l'ouverture et la fermeture desdits mors peut être est commandée par une couronne de came.

Les mors concentriques permettent d'employer des coquilles de tailles diverses et garantissent une mise en position de la deuxième coquille en prenant comme référence son centre.

L'exposé de l'invention sera maintenant poursuivi par la description d'un exemple préféré de réalisation, donnée ci-après à titre illustratif et non limitatif, en référence aux dessins annexés. Sur ceux-ci :
- la figure 1 est une vue en élévation-coupe partielle prise dans une machine comportant les porte-coquilles du dispositif selon l'invention et des supports pour entraîner suivant divers mouvements prédéterminés ces porte-coquilles, laquelle machine est montrée dans une position de repos où elle est prête à recevoir la première coquille ;
- la figure 2 est une vue similaire à la figure 1, mais où la partie de la machine montrée est celle que l'on voit à droite (et non à gauche) de l'axe d'articulation suivant un axe transversal des supports, la première coquille étant montrée en place dans le premier porte-coquille, le support sur lequel celui-ci est monté ayant pivoté d'un demi-tour autour de l'axe transversal susmentionné par rapport à sa position illustrée sur la figure 1;
- la figure 3 est une vue similaire à la figure 2, mais où la cuvette formée par la première coquille et par un joint annulaire a été remplie en matière polymérisable ;
- la figure 4 est une vue similaire à la figure 1, prise en même temps que la figure 3, mais pour la partie de la machine que l'on voit à gauche de l'axe transversal d'articulation, la deuxième coquille étant alors en place dans le deuxième porte-coquille ;
- la figure 5 est une vue similaire à la figure 3, dans une position de la machine où le deuxième support a basculé d'un demi-tour par rapport à sa position illustrée sur la figure 4 et où le positionnement relatif du premier porte-coquille et du deuxième porte-coquille a été ajusté pour que les surfaces en regard respectivement de la première coquille et de la deuxième coquille aient le positionnement relatif souhaité ;
- la figure 6 est une vue similaire à la figure 1, montrant à nouveau la machine en position de repos et montrant l'ensemble formé par la première coquille, par la deuxième coquille et par la matière pré-polymérisée en cours d'évacuation de cette machine ;
- la figure 7 est une vue similaire à la figure 2, pour une variante de réalisation de la machine et pour une variante de mise en oeuvre de l'opération de remplissage de la cuvette formée par la première coquille et par le joint annulaire ;
- la figure 8 est une autre vue en coupe de cette variante de la machine, prise suivant un plan de coupe disposé transversalement par rapport au plan de coupe suivant lequel est pris la figure 7 ;
- la figure 9 est une vue similaire à la figure 4 et montrant, en variante, la deuxième coquille munie d'un joint annulaire ; et
- la figure 10 est une vue agrandie similaire à la figure 5, dans le cas de la variante de la figure 9.

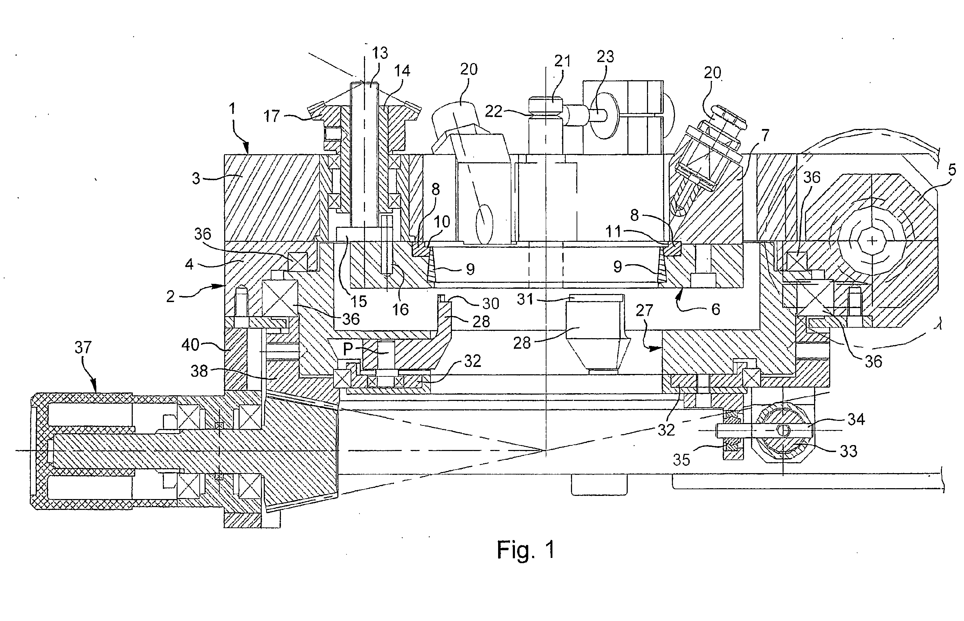

Les figures 1 à 6 montrent un dispositif de moulage selon l'invention, comportant d'eux supports formés ici par une première platine 1' et une deuxième platine 2 articulées l'une par rapport à l'autre.

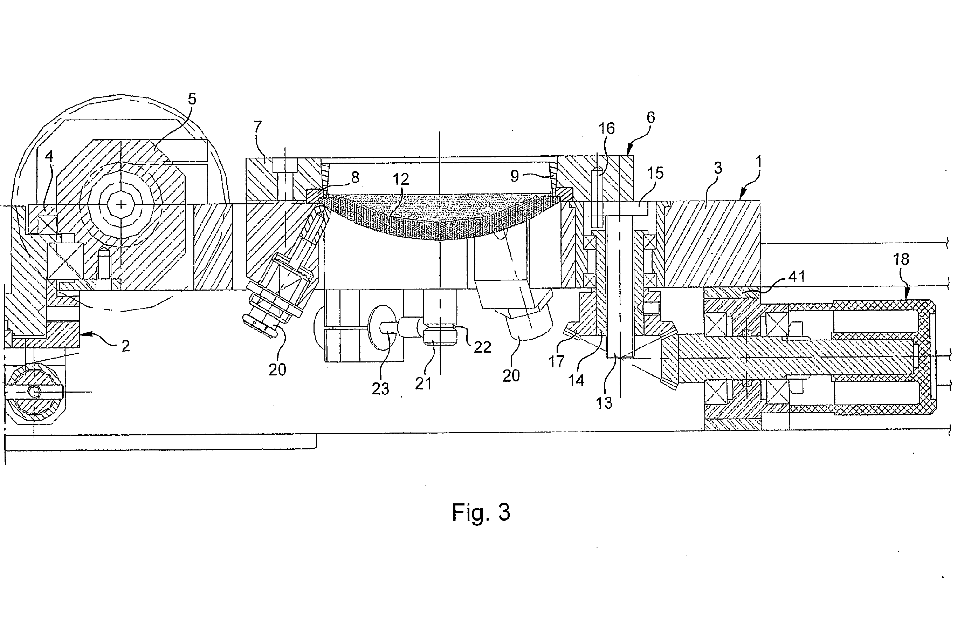

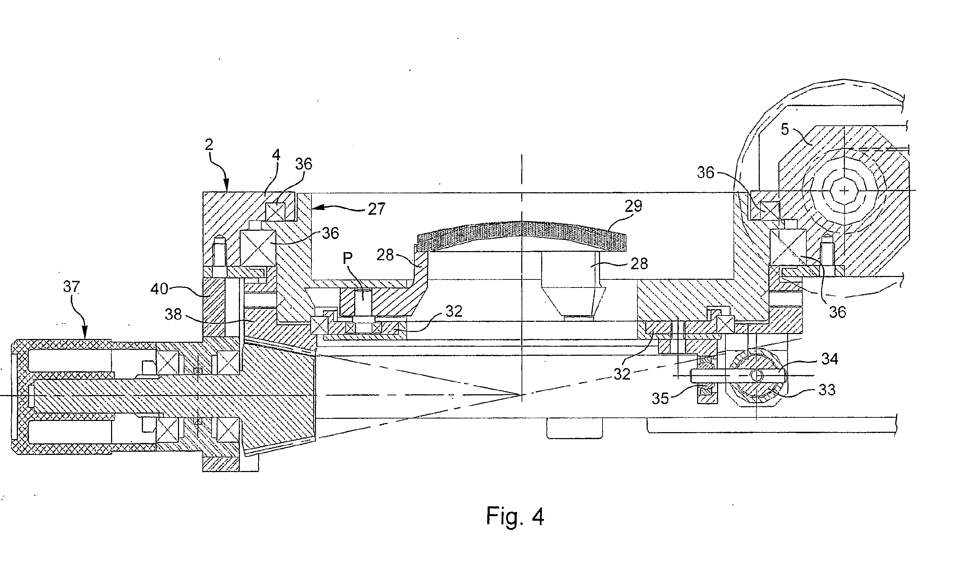

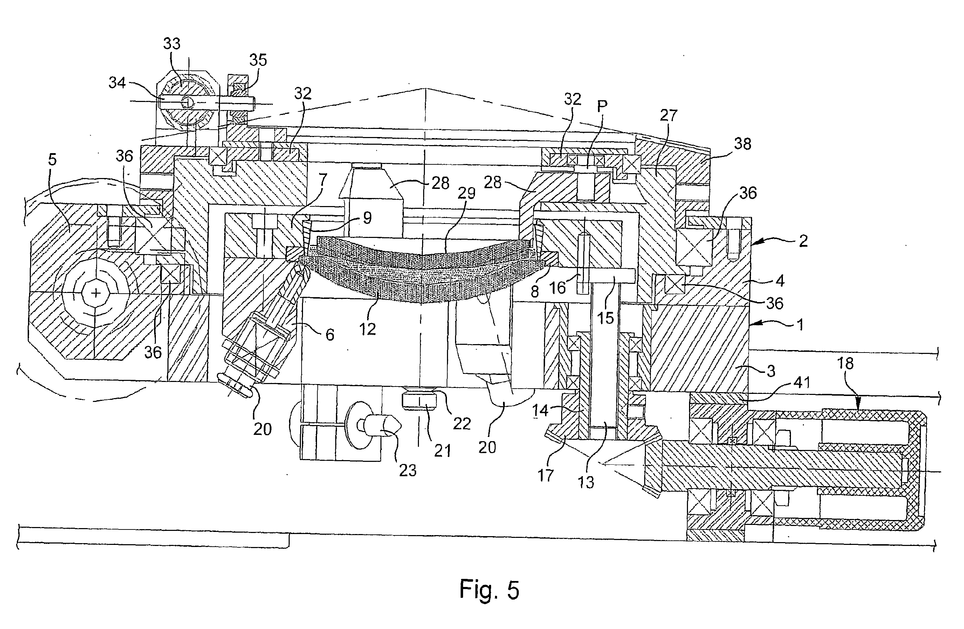

Chaque platine 1 et 2 comporte un corps, respectivement référencé par 3 et 4, dans lequel est pratiqué un évidement central. Les deux platines 1, 2 sont articulées au moyen d'une charnière 5 pour permettre à l'ensemble formé par les deux platines 1, 2 de se replier sur lui-même dans une première position (voir la figure 1 sur laquelle la première platine 1 est au-dessus de la deuxième platine 2), de s'ouvrir à la manière d'un livre (voir figures 3 et 4 qui représentent respectivement la première platine 1 disposée à droite de la charnière 5 et la deuxième platine disposée à gauche de la charnière 5) ou encore de se replier sur lui-même dans une deuxième position (voir la figure 5 sur laquelle la deuxième platine 2 est au-dessus de la première platine 1).

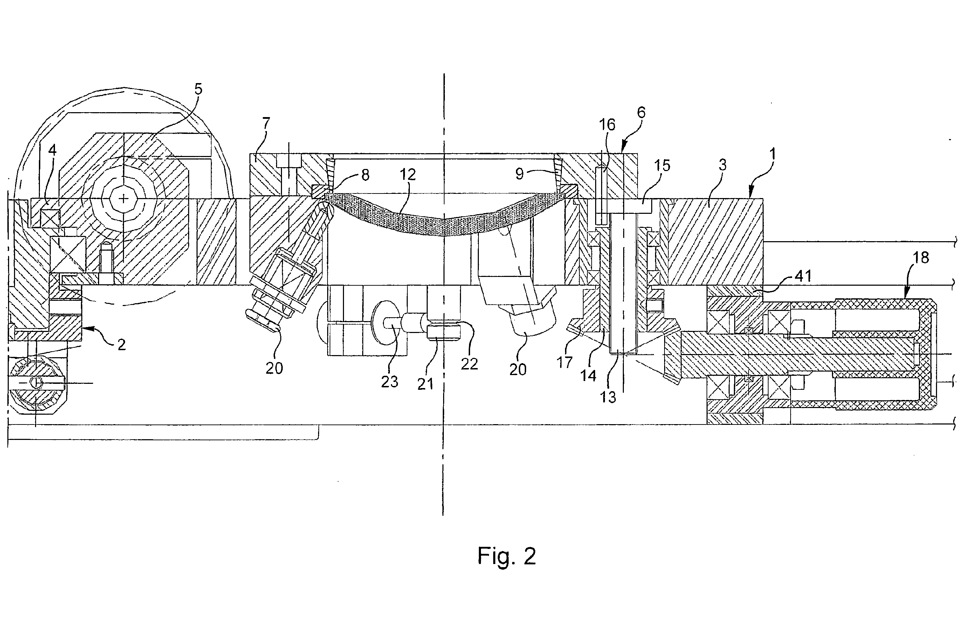

Au niveau de la première platine 1, visible à la figure 2, le dispositif comporte en outre un premier porte-coquille 6. Ce dernier comporte un corps 7 présentant un évidement central qui est positionné en vis-à-vis de l'évidement central de la première platine 1.

Le premier porte-coquille 6 comporte de plus un siège annulaire 8 emmanché en force dans le corps 3 et entourant ledit évidement central, ainsi qu'un joint annulaire 9 rattaché au corps 7 de sorte à se positionner, en l'absence de sollicitation, contre une surface interne du siège 8.

On notera que le siège 8 comporte un usinage circulaire définissant deux surfaces 10, 11 (voir figure 1) de calage d'une première coquille 12, le joint annulaire 9 affleurant au niveau d'une desdites surfaces de calage 10, celle qui est horizontale lorsque la première platine 1 est dans la position de la figure 1 (dans la suite de la présente description, les termes "horizontal" et "vertical" se réfèrent aux orientations telles qu'on les voit sur les figures 1 à 6).

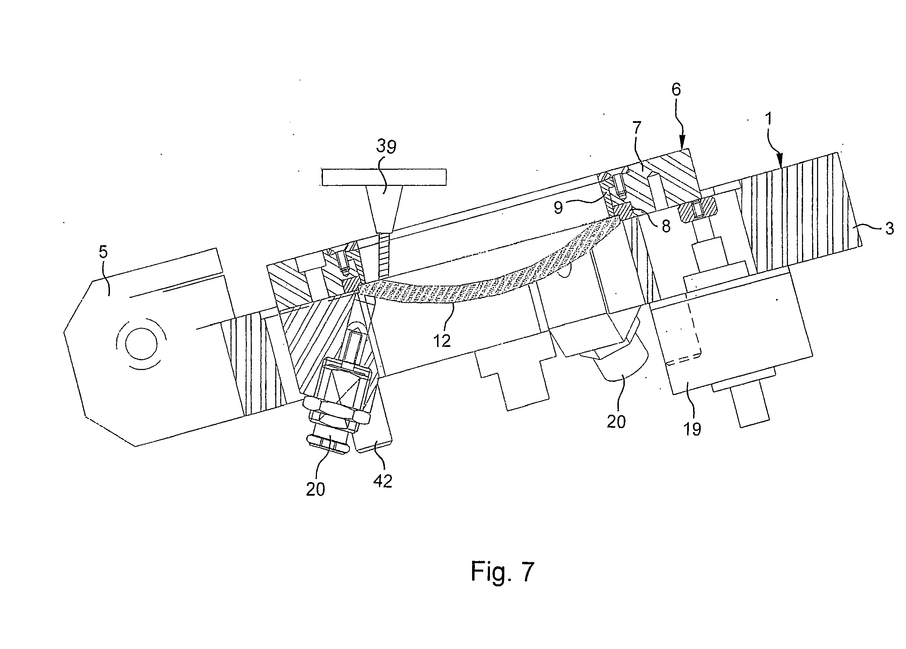

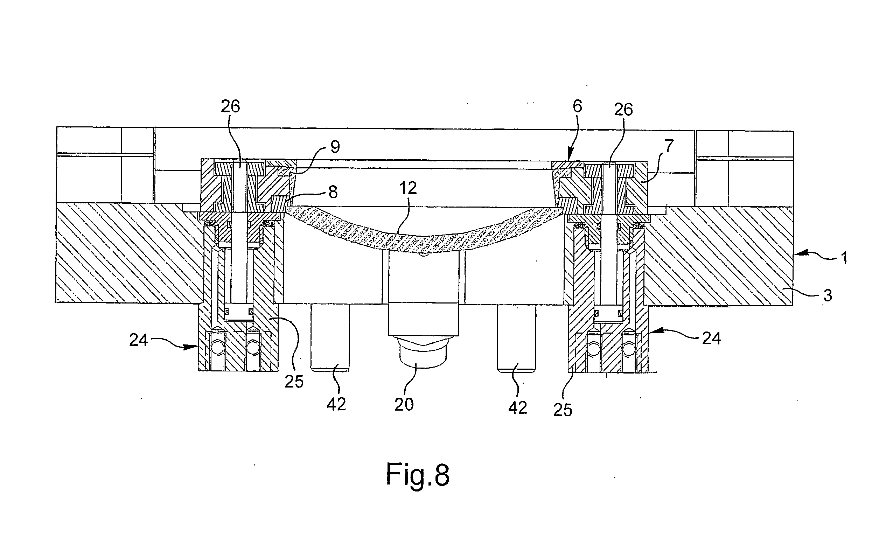

Le premier porte-coquille 6 est disposé dans l'évidemment central de la première platine 1 et est monté sur un jeu de glissières 42 (voir figures 7 et 8) permettant au premier porte-coquille 6 un mouvement de translation vertical par rapport à la première platine 1.

Ce mouvement de translation est commandé par un système de vis 13 et d'écrou 14. La vis 13 comporte une tête 15 s'appuyant sur une surface du premier porte-coquille 6 pour être à même de soulever ce dernier, la tête 15 étant immobilisée en rotation par un ergot 16.

On notera que l'ergot 16 n'arrête que la rotation et n'empêche pas le porte-coquille 6 de s'éloigner de la tête 15 et par conséquent de la première platine 1 suivant la verticale.

L'écrou 14 est monté sur roulements par rapport à la première platine 1 de sorte à pouvoir tourner librement pour faire monter ou descendre la vis 13.

Cet écrou 14 est de plus entraîné en rotation par un engrenage 17 à axes concourants permettant de commander la rotation de l'écrou 14 par une molette 18 actionnée manuellement.

Une grande précision quant au positionnement vertical du premier porte-coquille 6 par rapport à la première platine 1 est ainsi obtenue.

En variante, la translation du premier porte-coquille 6 peut être commandée par un moteur ou un vérin asservi 19 (voir figure 7).

Le premier porte-coquille 6 peut ainsi prendre une position dans laquelle il est en appui contre la première platine 1 (figure 2) et une pluralité de positions dans lesquelles le premier porte-coquille est à l'écart de la première platine 1 d'une distance contrôlée par la molette 18 ou le vérin 19 (figure 5).

Comme exposé plus haut, le siège annulaire 8 est destiné à recevoir et mettre en position la première coquille 12. Le premier porte-coquille 6 comporte à cet effet trois vérins 20 de serrage (seuls deux de ces vérins sont visibles sur les figures en coupe) disposés régulièrement à 120° autour du siège 8 et disposés obliquement de sorte que leurs tiges soient aptes à solliciter la première coquille 12 contre le siège 8 (figure 2, 3, 4 et 5) après déformation du joint 9.

Lorsque la première platine 1 est dans la position de la figure 2, le premier porte-coquille 6 repose par gravité sur la tête 15 de la vis 13.

A l'inverse, lorsque la première platine 1 est dans la position de la figure 1 (c'est-à-dire retournée par rapport à la position de la figure 2), la gravité tend à éloigner le premier porte-coquille 6 de la première platine 1. Pour éviter cela, et garantir que le premier porte-coquille 6 et la, première platine 1 demeurent plaqués l'un contre l'autre même pendant des manoeuvres de basculement de la première platine 1 autour de l'axe de la charnière 5, le dispositif de moulage comporte des moyens d'arrêt constitués ici d'une tige 21 saillant du premier porte-coquille 6 et comportant à son extrémité une rainure 22, ainsi qu'un vérin 23 comportant un embout conique propre à bloquer la tige 21 au niveau de sa rainure 22 (figure 1).

Cette position de blocage des moyens d'arrêt correspond à une position stable dans laquelle le premier porte-coquille 6 est plaqué contre la première platine 1.

Dans une variante représentée à la figure 8, ces moyens d'arrêt sont constitués par deux vérins 24 double effet dont le corps 25 de chacun est solidaire de la première platine 1 et dont la tige 26 de chacun est solidaire du premier porte-coquille 6. Ces vérins peuvent être mis en pression de manière classique pour assurer la fonction de placage du premier porte-coquille 6 contre la première platine 1, en l'occurrence par mise en communication de la chambre à petite section de ces vérins avec la source de pression tandis que la chambre à grande section est mise en communication avec un retour qui est à la pression atmosphérique.

Ces vérins peuvent également être mis en pression dans la chambre à grande section de sorte à jouer un rôle de vérin de compensation exposé plus loin.

En ce qui concerne la deuxième platine 2 (visible plus particulièrement à la figure 4), celle-ci comporte également un corps 4 dans lequel est pratiqué un évidement central occupé par un deuxième porte-coquille 27, le deuxième porte-coquille 27 comportant lui-même un évidement central en regard de l'évidement central du corps 4, de sorte que le deuxième porte-coquille 27 soit ouvert de part en part, le long de son épaisseur.

Le deuxième porte-coquille 27 comporte un jeu de trois mors 28 à serrage concentrique destiné au serrage et à la mise en position d'une deuxième coquille 29, la mise en position étant réalisée, de même que pour le premier porte-coquille 6, par un usinage des mors 28 définissant pour chacun d'eux deux surfaces orthogonales 30, 31 (voir figure 1). On notera que lorsque les platines 1 et 2 sont en vis-à-vis (à droite ou à gauche de la charnière 5), les surfaces 10 et 30 sont parallèles et les surfaces 11 et 31 sont concentriques.

Le serrage concentrique de ces mors 28 est ici réalisé de manière connue par une couronne de came 32 adaptée à déplacer radialement, lors de sa rotation autour de l'évidement central, trois pions P solidaires chacun d'un des mors 28.

La rotation de la couronne de came 32 est commandée par un vérin 33 apte à déplacer, perpendiculairement au plan du dessin, une tige 34 rattachée à la couronne de came 32 par une rotule 35.

Le deuxième porte-coquille 27 est monté sur des roulements 36 de sorte à pouvoir tourner par rapport au corps 4, autour de l'axe vertical par rapport auquel les mors 28 sont concentriques.

Cette rotation du deuxième porte-coquille 27 par rapport à la deuxième platine 2 peut être commandée par une molette 37 qui engrène sur une roue conique 38 solidaire du deuxième porte-coquille 27.

La position angulaire de la deuxième coquille 29 autour de l'axe vertical passant par son centre (le centre de concentricité des mors 28) peut ainsi être réglée avec précision avec la molette 37. On pourra automatiser cette tâche en remplaçant la molette 37 par un moteur asservi.

Globalement, le dispositif de moulage est maintenu au sein d'une machine de production par l'axe de la charnière 5. Des butées 40, 41 définissent les positions horizontales de repos de la première platine 1 lorsqu'elle est à droite de la charnière 5 et de la deuxième platine 2 lorsqu'elle est à gauche de la charnière 5.

Le pivotement des platines 1, 2 autour de la charnière 5 maintenue fixe est motorisé, par exemple par des roues respectives tournant autour de l'axe de la charnière 5, les platines 1, 2 étant chacune liée en rotation à l'une desdites roues.

De plus, des moyens de commande sont prévus pour piloter les différents organes du dispositif de moulage qui peuvent être actionnés automatiquement.

Par exemple, un automate programmable ou un microprocesseur exécutant un programme approprié permet d'actionner dans un ordre précis le pivotement des deux platines 1, 2, le mouvement des mors concentriques 28, la translation du premier porte-coquille 6 par rapport à la première platine 1 (dans le cas où un vérin 19 est prévu, figure 7), la commande des vérins de calage 20 et éventuellement des vérins double effet 24.

Ces moyens de commande sont également adaptés au contrôle d'éventuels dispositifs supplémentaires de préhension, de dépôt de matière polymérisable ou de polymérisation, comme exposé plus loin.

Le dispositif de moulage que l'on vient de décrire fonctionne de la manière indiquée ci-après.

La position initiale du dispositif est celle de la figure 1, les deux platines 1, 2 étant superposées à droite de la charnière 5.

Les moyens d'arrêt 21, 22, 23 (ou les vérins de blocage/compensation 24) étant dans leur position où il retiennent le premier porte-coquille 6 contre la première platine 1, la première coquille 12 est alors chargée sur la première platine 1 par le dessus. Cette première coquille 12 est amenée par tout moyen de préhension, par exemple une ventouse, avec sa concavité tournée vers le bas, c'est-à-dire vers la deuxième platine 2, pour être calée dans le siège annulaire 8, les vérins de calage 20 étant rétractés.

La première coquille 12 repose ainsi par gravité sur la surface de calage 10 et est positionnée latéralement par la surface de calage 11.

Les vérins de serrage 20 sont ensuite déployés et maintenus en pression pour que leurs tiges bloquent les bords de la première coquille 12 contre le siège annulaire 8 déformant ainsi le joint d'étanchéité 9.

La première coquille 12 ayant été mise en position, la première platine 1 est pivotée pour se placer à droite de la charnière 5 (voir figure 2).

On notera que dans cette position, le joint annulaire 9 est comprimé contre la première coquille 12, de manière que la jonction entre le joint 9 et la première coquille 12 soit étanche et que la face concave de la première coquille 12, qui doit ici servir au moulage, coopère avec le siège 8 et le joint 9 pour former une cuvette dont le fond regarde vers le haut (figure 2).

Une quantité prédéterminée de matière polymérisable, en fonction du volume à mouler, est ensuite déposée dans la cuvette ainsi formée, ce dépôt pouvant être effectué manuellement ou par un dispositif de dépôt approprié tel qu'une vanne de dosage.

La figure 3 représente la première platine 1 après le dépôt de matière.

Du fait que respectivement la partie droite et la partie gauche du dispositif montrées sur les figures 3 et 4 correspondant à une même position, l'opération montrée sur la figure 4 peut être effectuée simultanément au dépôt de matière qui vient d'être exposé. Cette opération en temps masqué permet un gain de productivité. La deuxième coquille 29 est en effet amenée par le dessus, éventuellement par le même moyen de préhension que la première coquille 12, et est mise en position et serrée par les mors 28, sa face servant au moulage, ici sa face convexe, étant tournée vers le haut (figure 4).

Une fois la deuxième coquille 29 serrée, il peut être nécessaire de régler sa position angulaire autour d'un axe vertical, dans le cas où la deuxième coquille 29 est destinée au moulage d'un verre corrigeant l'astigmatisme. Ce réglage est effectué par une action sur la molette 37.

La deuxième platine 2 est ensuite pivotée pour venir se superposer à la première platine 1 sur la droite de la charnière 5.

La deuxième coquille 29 est alors en vis-à-vis et à distance de la cuvette formée par la première coquille 12.

Les moyens d'arrêt 21, 22, 23 (ou les vérins 24) étant inhibés, le premier porte-coquille 6 est soulevé de la première platine par l'action de la molette 18 ou du vérin asservi 19, de sorte que la première coquille 12 vienne mettre en contact la matière polymérisable avec la deuxième coquille 29, telle que représenté sur la figure 5.

On notera qu'une nourrice de matière est formée par le surplus de matière à la périphérie de la surface utile concave de la première coquille 12.

La première et la deuxième coquille 12, 29 étant dans une position prédéterminée par rapport au dispositif, la remontée du premier porte-coquille 6 peut être contrôlée pour que l'écartement des deux coquilles 12, 29 corresponde précisément aux dimensions recherchées pour le moule.

Une phase de polymérisation de la matière est ensuite mise en oeuvre. Pour cela, des moyens de projection, par exemple de rayons ultraviolets, sont amenés au-dessus et au-dessous de l'ensemble formé par les deux coquilles 12, 29 et la matière.

Les coquilles 12, 29 sont à cet effet avantageusement transparentes et les évidements centraux des platines 1, 2 et des porte-coquilles 6, 27 permettent une large accessibilité aux rayons, pour garantir une polymérisation efficace.

Par ailleurs, le dispositif de moulage est prévu pour accompagner le retrait de la matière durant la polymérisation. En effet, la matière occupant moins de volume au fur et à mesure de sa polymérisation, elle exerce une force d'attraction sur les surfaces de moulage des coquilles 12, 29.

Le premier porte-coquille 6 étant simplement posé par gravité sur la tête 15 de la vis 13 (ou sur la tige du vérin asservi 19), cette force d'attraction est mise à profit pour soulever le premier porte-coquille 6 de sorte que la première coquille 12 et la deuxième coquille 29 restent plaquées à la matière pendant le retrait, et éviter ainsi un décollement entre les coquilles et la matière.

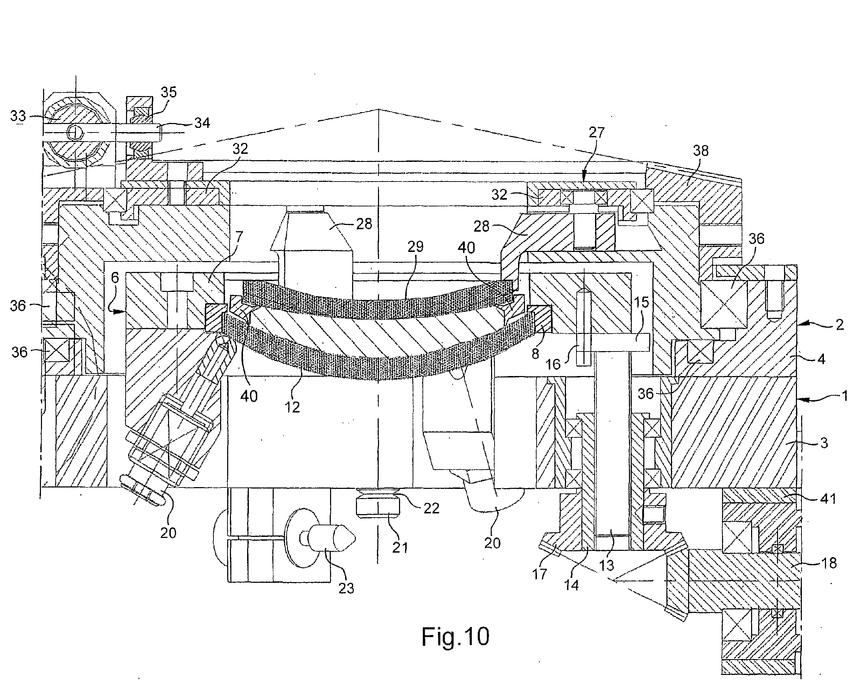

Les vérins 24 de la figure 10 peuvent de plus agir en tant que vérins de compensation pour faciliter le rapprochement des coquilles. Les chambres à grande section de ces vérins 24 sont alors mises en pression pour que les vérins 24 exercent sur le premier porte-coquille 6 une force verticale dirigée vers le haut et d'une intensité légèrement inférieure au poids du premier porte-coquille 6, tandis que les chambres à petite section sont reliées à un retour qui est à la pression atmosphérique.

Suite à la polymérisation, un bloc rigide est formé par les coquilles 12, 29 et la matière solidifiée.

Les mors concentriques 28 sont ensuite desserrés et la deuxième platine 2 est pivotée vers sa position initiale tandis que le premier porte-coquille 6 est ramené et bloqué contre la première platine 1.

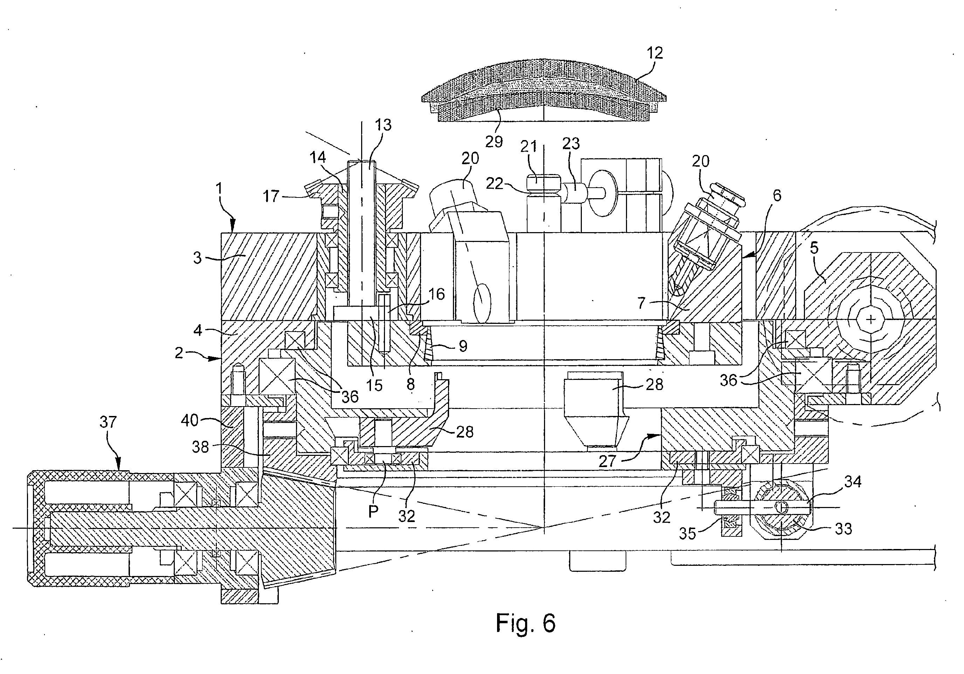

La première platine 1 est alors également pivotée vers sa position initiale, telle que montrée à la figure 6, et le bloc formé des coquilles 12, 29 et de la matière solidifiée est ensuite évacué par le haut, éventuellement par les mêmes moyens de préhension que pour la mise en position des coquilles 12, 29, et après le retrait des vérins de serrage 20.

Dans la variante comportant le vérin asservi 19 et les vérins 24, il est possible d'effectuer en parallèle, après desserrage des mors 28, l'opération consistant à ramener et bloquer le porte-coquille 6 contre la première platine 1 et l'opération consistant à pivoter cette première platine 1 vers sa position initiale.

La lentille ophtalmique ainsi moulée et polymérisée pourra suivre d'autres traitements consécutifs où elle sera démoulée et préparée pour être montée sur un support tel qu'une monture de lunettes.

La figure 7 montre une variante de l'étape de dépôt de la matière polymérisable dans la cuvette formée par la première coquille 12 et le premier porte-coquille 6. Une buse 39 de dépôt de matière est schématiquement représentée et, à la différence de l'étape décrite précédemment, la première platine 1 est inclinée.

La buse 39 commence par déposer un filet de matière sur un bord de la première coquille 12 et, au fur et à mesure du remplissage de la cuvette, la première platine 1 revient à sa position horizontale, jusqu'à obtenir le résultat de la figure 3.

Cette variante permet de minimiser les défauts provoqués par l'impact de la matière contre la première coquille 12 lors du versement.

Par ailleurs, au lieu de revenir à la position horizontale de la figure 3 au fur et à mesure du remplissage, la première platine 1 peut également rester inclinée pour les étapes suivantes. La deuxième platine 2 viendra alors se superposer à la première platine 1 de sorte à être elle-même inclinée, ce qui permet à la deuxième coquille 29, lors de l'étape de rapprochement entre la première coquille 12 et la deuxième coquille 29, d'entrer en contact avec la matière en commençant par un bord plutôt que par le centre.

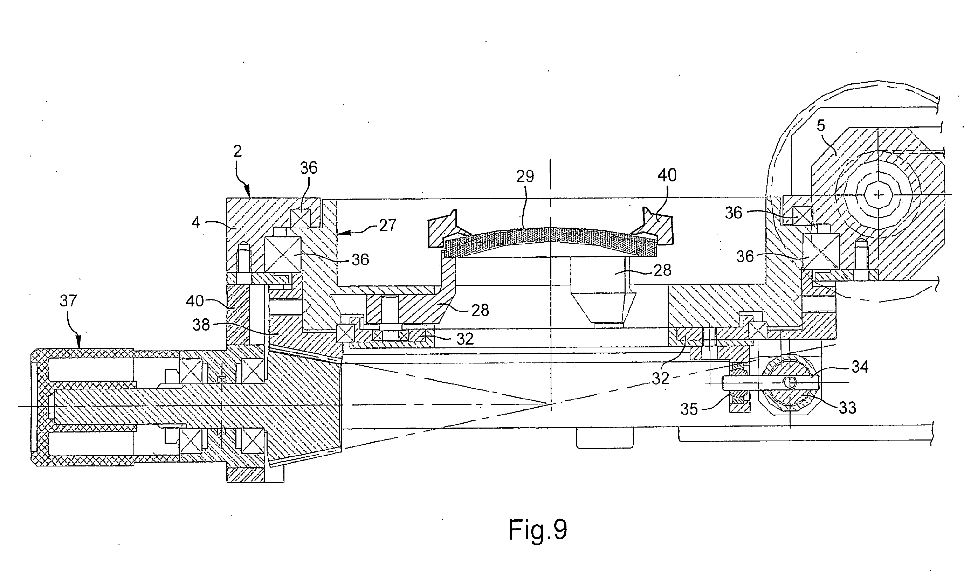

Les figures 9 et 10 représentent quant à elles une variante dans laquelle le moulage est réalisé avec un joint annulaire 40, fixé sur la deuxième coquille 29 au préalable ou juste après son serrage par les mors concentriques 28 (voir figure 9).

Après le basculement de la deuxième platine 2 sur la droite de la charnière 5, et le rapprochement des deux coquilles 12, 29 (figure 10), la matière reste prise entre les deux coquilles 12, 29 et le joint 40, prête à être polymérisée.

On notera sur cette figure 10, de même que sur les figures 1, 5 et 6, que la superposition des deux platines 1, 2 se fait en plaçant l'une contre l'autre deux surfaces de référence appartenant chacune respectivement à la première platine 1 et à la deuxième platine 2.

Dans une variante non représentée, le moulage peut être effectué autrement qu'à plat, par exemple verticalement. Les deux platines sont alors dans leur position relative de moulage et dans une orientation verticale, un joint annulaire du type représenté aux figures 9 et 10 étant prévu entre les deux coquilles. Au cours du moulage, la matière est injectée par un orifice pratiqué dans le joint, tandis qu'un évent est prévu, également dans le joint, sur la partie supérieure de celui-ci.

Dans une autre variante non représentée, les supports sont constitués par des éléments autres que des platines.

De même, le moulage d'autres types de lentilles optiques peut être envisagé, par exemple des lentilles de jumelles ou analogues.

Des variantes de réalisation du dispositif peuvent ainsi être envisagées sans pour autant sortir du cadre de l'invention.

## Revendications

1. Dispositif pour l'obtention d'une lentille optique, en particulier une lentille ophtalmique, à partir d'une matière polymérisable, comportant une première coquille de moulage (12), une deuxième coquille de moulage (29) et des moyens de maintien desdites première (12) et deuxième (29) coquilles de moulage dans une position prédéterminée de moulage où elles sont disposées à distance en regard l'une de l'autre dans une position relative prédéterminée et suivant une orientation prédéterminée ; **caractérisé en ce que** lesdits moyens de maintien comportent :
- un premier porte-coquille (6) adapté à immobiliser ladite première coquille (12) dans une position prédéterminée par rapport audit premier porte-coquille (6) ; et un deuxième porte-coquille (27) adapté à immobiliser ladite deuxième coquille (29) dans une position prédéterminée par rapport audit deuxième porte-coquille (27) ;
- un premier support (1) sur lequel est monté ledit premier porte-coquille (6) et un deuxième support (2) sur lequel est monté le deuxième porte-coquille (27), le premier support (1) et le deuxième support (2) étant articulés l'un par rapport à l'autre autour d'une charnière fixe (5) vis-à-vis de laquelle chacun des premier support (1) et deuxième support (2) peut pivoter ;
avec le premier support (1) et le deuxième support (2) qui admettent une première position relative où ils sont l'un contre l'autre tandis que la première coquille (12) et la deuxième coquille (29) sont dans ladite position relative prédéterminée, et qui admettent une deuxième position relative où, par rapport à ladite première position relative, le premier support (1) et le deuxième support (2) se sont écartés l'un de l'autre par un mouvement relatif de pivotement, ledit dispositif admettant une configuration de moulage où le premier support (1) et le deuxième support (2) sont dans ladite première position relative tandis que la première coquille (12) et la deuxième coquille (29) sont suivant ladite orientation prédéterminée ;
le dispositif admettant en outre :
une première configuration où le premier support (1) et le deuxième support (2) sont dans ladite première position relative et sont chacun orientés à plat avec le premier support (1) qui est au-dessus du deuxième support (2) ; et
une deuxième configuration où le premier support (1) et le deuxième support (2) sont dans ladite première position relative et sont chacun orientés à plat avec le deuxième support (2) qui est situé au-dessus du premier support (1).

2. Dispositif selon la revendication 1, **caractérisé en ce que** ladite orientation prédéterminée est une orientation à plat.

3. Dispositif selon la revendication 1 ou 2, **caractérisé en ce que** le premier support (1) et le deuxième support (2) sont à l'opposé l'un de l'autre dans ladite deuxième position relative.

4. Dispositif selon l'une des revendications 1 à 3, **caractérisé en ce qu'**il admet une configuration ouverte où le premier support (1) et le deuxième support (2) sont dans ladite deuxième position relative et sont chacun à plat.

5. Dispositif selon la revendication 4, **caractérisé en ce que** les faces respectivement du premier support (1) et du deuxième support (2) qui se font face dans ladite première position relative, regardent chacune vers le haut dans ladite configuration ouverte.

6. Dispositif selon l'une des revendications 1 à 5, **caractérisé en ce que** le premier support (1) et le deuxième support (2) présentent chacun une surface de référence, lesdites surfaces de référence étant disposées l'une contre l'autre lorsque le premier support (1) et le deuxième support (2) sont l'un contre l'autre, dans ladite première position relative.

7. Dispositif selon l'une des revendications 1 à 6, **caractérisé en ce que** le premier support (1) et le deuxième support (2) sont reliés par une charnière (5).

8. Dispositif selon l'une des revendications 1 à 7, **caractérisé en ce qu'**il comporte en outre deux roues perpendiculaires à l'axe d'articulation des deux supports (1, 2) et situées chacune de part et d'autre de cette articulation de sorte que l'axe de chacune des roues coïncide avec ledit axe d'articulation des deux supports (1, 2), une première de ces roues étant liée en rotation avec le premier support (1) et une deuxième de ces roues étant liée en rotation avec le deuxième support (2), de manière que la rotation de la première roue entraîne un pivotement du premier support (1) relativement au deuxième support (2) et que la rotation de la deuxième roue entraîne un pivotement du deuxième support (2) relativement au premier support (1).

9. Dispositif selon la revendication 8, **caractérisé en ce que** lesdites roues sont des roues dentées aptes à être entraînées chacune en rotation par un pignon relié à un moteur ou une crémaillère reliée à un vérin.

10. Dispositif selon l'une des revendications 1 à 9, **caractérisé en ce que** le premier porte-coquille (6) coopère à coulissement avec le premier support (1) pour permettre, lorsque la première coquille (12) et la deuxième coquille (29) sont dans ladite position de moulage, un mouvement d'éloignement ou de rapprochement mutuel de la première coquille (12) et de la deuxième coquille (29).

11. Dispositif selon la revendication 10, **caractérisé en ce que** le coulissement du premier porte-coquille (6) par rapport au premier support (1) est commandé par un vérin asservi (19), ledit vérin asservi (19) permettant en outre d'immobiliser le premier porte-coquille (6) relativement au premier support (1) à l'exception d'un mouvement de rapprochement entre le premier porte-coquille (6) et le deuxième porte coquille (27).

12. Dispositif selon l'une des revendications 1 à 11, **caractérisé en ce que** le deuxième porte-coquille (27) est mobile en rotation par rapport au deuxième support (2).

13. Dispositif selon l'une des revendications 1 à 12, **caractérisé en ce que** ladite position prédéterminée de la première coquille (12) par rapport au premier porte-coquille (6) est définie par un siège annulaire (8) adapté à caler la première coquille (12) selon deux directions orthogonales.

14. Dispositif selon la revendication 13, **caractérisé en ce que** le premier porte-coquille (6) comporte au moins un vérin (24) adapté à maintenir la première coquille (12) contre ledit siège annulaire (8).

15. Dispositif selon l'une des revendications 1 à 14, **caractérisé en ce que** ladite position prédéterminée de la deuxième coquille (29) par rapport au deuxième porte-coquille (27) est définie par un jeu de mors concentriques (28) adaptés au serrage de la deuxième coquille (29) par sa circonférence.

16. Dispositif selon la revendication 15, **caractérisé en ce que** l'ouverture et la fermeture desdits mors (28) est commandée par une couronne de came (32).

17. Procédé pour l'obtention d'une lentille optique, en particulier une lentille ophtalmique, à partir d'une matière polymérisable, mettant en oeuvre le dispositif selon l'une des revendications 1 à 16, ce procédé étant **caractérisé en ce qu'**il comporte :
- une étape de polymérisation de la matière polymérisable présente entre la première coquille (12) et la deuxième coquille (29) lorsque le dispositif est dans ladite deuxième configuration de manière qu'un bloc rigide soit formé par lesdites coquilles (12, 29) et la matière solidifiée ;
- une étape de passage de ladite deuxième configuration à ladite première configuration du dispositif ; puis
- une étape d'évacuation dudit bloc rigide lorsque le dispositif est dans ladite première configuration.

## Claims

1. Device for producing an optical lens, especially an ophthalmic lens, from a polymerisable material, the device comprising a first moulding shell (12), a second moulding shell (29) and means for holding said first moulding shell (12) and said second moulding shell (29) in a predetermined moulding position in which they face each other at a distance in a predetermined relative position and with a predetermined orientation, **characterised in that** said holding means comprise:
- a first shell support (6) for immobilising said first shell (12) in a predetermined position relative to said first shell support (6) and a second shell support (27) for immobilising said second shell (29) in a predetermined position relative to said second shell support (27), and
- a first support (1) on which said first shell support (6) is mounted and a second support (2) on which the second shell support (27) is mounted, the first support (1) and the second support (2) being articulated to each other about a fixed hinge (5) with respect to which the first support (1) and the second support (2) can each pivot;
and the first support (1) and the second support (2) can assume a first relative position in which they are one against the other with the first shell (12) and the second shell (29) in said predetermined relative position and a second relative position in which, compared to said first relative position, the first support (1) and the second support (2) have moved away from each other by virtue of a relative pivoting movement, said device having a moulding configuration in which the first support (1) and the second support (2) are in said first relative position and the first shell (12) and the second shell (29) have said predetermined orientation;
the device further having:
a first configuration in which the first support (1) and the second support (2) are in said first relative position and each is oriented flat with the first support (1) above the second support (2); and
a second configuration in which the first support (1) and the second support (2) are in said first relative position and each is oriented flat with the second support (2) above the first support (1).

2. Device according to claim 1, **characterised in that** said predetermined orientation is a flat orientation.

3. Device according to claim 1 or claim 2, **characterised in that** the first support (1) and the second support (2) are opposite each other in said second relative position.

4. Device according to any one of claims 1 to 3, **characterised in that** it has an open configuration in which the first support (1) and the second support (2) are in said second relative position and each is flat.

5. Device according to claim 4, **characterised in that** the respective faces of the first support (1) and the second support (2) that face each other in said first relative position each face upward in said open configuration.

6. Device according to any one of claims 1 to 5, **characterised in that** the first support (1) and the second support (2) each have a reference surface, said reference surfaces being disposed against each other when the first support (1) and the second support (2) are against each other in said first relative position.

7. Device according to any one of claims 1 to 6, **characterised in that** the first support (1) and the second support (2) are connected by a hinge (5).

8. Device according to any one of claims 1 to 7, **characterised in that** it further includes two wheels perpendicular to the articulation axis of the two supports (1, 2) and each situated on either side of that articulation axis so that the axis of each of the wheels coincides with said articulation axis of the two supports (1, 2), a first of these wheels being rotationally connected to the first support (1) and a second of these wheels being rotationally connected to the second support (2) so that rotation of the first wheel drives pivoting of the first support (1) relative to the second support (2) and rotation of the second wheel drives pivoting of the second support (2) relative to the first support (1).

9. Device according to claim 8, **characterised in that** said wheels are toothed wheels each adapted to be driven by a gear connected to a motor or a rack connected to a cylinder.

10. Device according to any one of claims 1 to 9, **characterised in that** the first shell support (6) cooperates slidingly with the first support (1) to enable mutual closing or opening movement of the first shell (12) and the second shell (29) when the first shell (12) and the second shell (29) are in said moulding position.

11. Device according to claim 10, **characterised in that** sliding of the first shell support (6) relative to the first support (1) is driven by a servocontrolled cylinder (19) which also immobilises the first shell support (6) relative to the first support (1) except for closing movement of the first shell support (6) and the second shell support (27).

12. Device according to any one of claims 1 to 11, **characterised in that** the second shell support (27) is rotatable relative to the second support (2).

13. Device according to any one of claims 1 to 12, **characterised in that** said predetermined position of the first shell (12) relative to the first shell support (6) is defined by an annular seat (8) adapted to position the first shell (12) in two orthogonal directions.

14. Device according to claim 13, **characterised in that** the first shell support (6) includes at least one cylinder (24) adapted to hold the first shell (12) against said annular seat (8).

15. Device according to any one of claims 1 to 14, **characterised in that** said predetermined position of the second shell (29) relative to the second shell support (27) is defined by a set of concentric jaws (28) adapted to clamp the circumference of the second shell (29).

16. Device according to claim 15, **characterised in that** opening and closing of said jaws (28) are controlled by a cam ring (32).

17. Method of obtaining an optical lens, especially an ophthalmic lens, from a polymerisable material, using the device according to any one of claims 1 to 16, the method being **characterised in that** it includes:
- a step of polymerising the polymerisable material between the first shell (12) and the second shell (29) with the device in said second configuration so that a rigid block is formed by said shells (12, 29) and the solidified material;
- a step of moving from said second configuration to said first configuration of the device; then
- a step of evacuating said rigid block with the device in said first configuration.

## Patentansprüche

1. Vorrichtung zum Erhalten einer optischen Linse, insbesondere einer ophthalmischen Linse, ausgehend von einem polymerisierbaren Material, umfassend eine erste Gusskokille (12), einer zweite Gusskokille (29) und Haltemittel der ersten (12) und zweiten (29) Gusskokille in einer vorbestimmten Gussposition, in welcher sie in einem Abstand zueinander in einer vorbestimmten relativen Position und entlang einer vorbestimmten Ausrichtung angeordnet sind; **dadurch gekennzeichnet, dass** die Haltemittel umfassen:
- einen ersten Kokillenträger (6), dazu ausgelegt die erste Kokille (12) in einer vorbestimmten Position bezüglich des ersten Kokillenträgers (6) zu immobilisieren; und einen zweiten Kokillenträger (27), dazu ausgelegt die zweite Kokille (29) in einer vorbestimmten Position bezüglich des zweiten Kokillenträgers (27) zu immobilisieren;
- eine erste Halterung (1), an welcher der erste Kokillenträger (6) angeordnet ist, und eine zweite Halterung (2), an welcher der zweite Kokillenträger (27) angeordnet ist, wobei die erste Halterung (1) und die zweite Halterung (2) bezüglich einander um ein festes Gelenk (5) gelenkig verbunden sind, gegenüber dem jede der ersten Halterung (1) und der zweiten Halterung (2) schwenken kann;
mit der ersten Halterung (1) und der zweite Halterung (2), welche eine erste relative Position ermöglichen, in welcher sie aneinander anliegend sind, während die erste Kokille (12) und die zweite Kokille (29) in der vorbestimmten relativen Position sind, und welche eine zweite relative Position ermöglichen, in welcher die erste Halterung (1) und die zweite Halterung (2) sich bezüglich der ersten relativen Position voneinander durch eine relative Schwenkbewegung entfernt haben, wobei die Vorrichtung eine Gusskonfiguration ermöglicht, in welcher die erste Halterung (1) und die zweite Halterung (2) in der ersten relativen Position sind, während die ersten Kokille (12) und die zweite Kokille (29) gemäß der vorbestimmten Ausrichtung sind;
wobei die Vorrichtung zudem ermöglicht:
eine erste Konfiguration, in welcher die erste Halterung (1) und die zweite Halterung (2) in der ersten relativen Position sind und jeweils flach bezüglich der ersten Halterung (1) ausgerichtet sind, welche oberhalb der zweiten Halterung (2) ist; und eine zweite Konfiguration, in welcher die erste Halterung (1) und die zweite Halterung (2) in der ersten relativen Position sind und jeweils flach bezüglich der zweiten Halterung (2), welche über der ersten Halterung (1) befindlich ist, ausgerichtet sind.

2. Vorrichtung nach Anspruch 1, **dadurch gekennzeichnet, dass** die vorbestimmte Ausrichtung eine flache Ausrichtung ist.

3. Vorrichtung nach Anspruch 1 oder 2, **dadurch gekennzeichnet, dass** die erste Halterung (1) und die zweite Halterung (2) in der zweiten relativen Position einander entgegengesetzt sind.

4. Vorrichtung nach einem der Ansprüche 1 bis 3, **dadurch gekennzeichnet, dass** sie einer offene Konfiguration ermöglicht, in welcher die ersten Halterung (1) und die zweite Halterung (2) in der zweiten relativen Position jeweils flach sind.

5. Vorrichtung nach Anspruch 4, **dadurch gekennzeichnet, dass** die jeweiligen Seiten der ersten Halterung (1) und der zweiten Halterung (2), welcher in der ersten relativen Position einander gegenüber stehen, in der offen Konfiguration jeweils nach oben schauen.

6. Vorrichtung nach einem der Ansprüche 1 bis 5, **dadurch gekennzeichnet, dass** die erste Halterung (1) und die zweite Halterung (2) jeweils eine Referenzfläche aufweisen,
wobei die Referenzflächen aneinander anliegend angeordnet sind, wenn die ersten Halterung (1) und die zweite Halterung (2) in der ersten relativen Position aneinander anliegend sind.

7. Vorrichtung nach einem der Ansprüche 1 bis 6, **dadurch gekennzeichnet, dass** die erste Halterung (1) und die zweite Halterung (2) mit einem Scharnier (5) verbunden sind.

8. Vorrichtung nach einem der Ansprüche 1 bis 7, **dadurch gekennzeichnet, dass** sie zudem zwei Rollen umfasst, welche zu der Gelenkachse der beiden Halterungen (1,2) senkrecht sind und welche jeweils beiderseits dieses Gelenks befindlich sind, derart, dass die Achse jeder der Rollen mit der Gelenkachse der beiden Halterungen (1,2) zusammenfällt, wobei eine erste der Rollen drehbar mit der ersten Halterung (1) verbunden ist und eine zweite der Rollen drehbar mit er zweiten Halterung (2) verbunden ist, so dass die Drehung der ersten Rolle ein Schwenken der ersten Halterung (1) relativ zu der zweiten Halterung (2) antreibt und dass die Drehung der zweiten Rolle eine Schwenken der zweiten Halterung (2) relativ zu der ersten Halterung (1) antreibt.

9. Vorrichtung nach Anspruch 8, **dadurch gekennzeichnet, dass** die Rollen gezahnte Rollen sind, die dazu geeignet sind, jeweils durch ein mit einem Motor verbundenes Ritzel oder eine mit einem Spindel verbundene Zahnstange angetrieben zu werden.

10. Vorrichtung nach einem der Ansprüche 1 bis 9, **dadurch gekennzeichnet, dass** der erste Kokillenträger (6) gleitend mit der ersten Halterung (1) zusammenwirkt, um, wenn die erste Kokille (12) und die zweite Kokille (29) in der Gussposition sind, eine gegenseitige Entfernungs- oder Annäherungs-Bewegung der ersten Kokille (12) und der zweiten Kokille (29) zu ermöglichen.

11. Vorrichtung nach Anspruch 10, **dadurch gekennzeichnet, dass** das Gleiten des ersten Kokillenträgers (6) bezüglich der ersten Halterung (1) durch eine Spindelantrieb (19) gesteuert ist, wobei der Spindelantrieb (19) zudem ermöglicht, den ersten Kokillenträger (6) relativ zu der ersten Halterung (1) zu immobilisieren, mit Ausnahme der Annäherungsbewegung zwischen dem ersten Kokillenträger und dem zweiten Kokillenträger (27).

12. Vorrichtung nach einem der Ansprüche 1 bis 11, **dadurch gekennzeichnet, dass** der zweite Kokillenträger (27) drehbar beweglich bezüglich der zweiten Halterung (2) ist.

13. Vorrichtung nach einem der Ansprüche 1 bis 12, **dadurch gekennzeichnet, dass** die vorbestimmte Position der ersten Kokille (12) bezüglich des ersten Kokillenträgers (6) durch einen ringförmigen Sitz (8) definiert ist, welcher dazu ausgelegt ist, die erste Kokille (12) entlang zweie orthogonaler Richtungen zu verkanten.

14. Vorrichtung nach Anspruch 13, **dadurch gekennzeichnet, dass** der erste Kokillenträger (6) zumindest eine Spindel (24) umfasst, welche dazu ausgelegt ist, die erste Kokille (12) gegen der ringförmigen Sitz (8) zu halten.

15. Vorrichtung nach einem der Ansprüche 1 bis 14, **dadurch gekennzeichnet, dass** die vorbestimmte Position der zweiten Kokille (29) bezüglich des zweiten Kokilleträgers (27) durch einen Satz konzentrischen Spannbacken (28) definiert ist, welche zum Einspannen der zweiten Kokille (29) an ihrem Umfang ausgelegt sind.

16. Vorrichtung nach Anspruch 15, **dadurch gekennzeichnet, dass** das Öffnen und Schlie-ßen der Spannbacken (28) durch einen Nockenkranz (32) gesteuert wird.

17. Verfahren zum Erhalten einer optischen Linse, insbesondere einer ophthalmischen Linse, ausgehend von einem polymerisierbaren Material, welches die Vorrichtung nach einem der Ansprüche 1 bis 16 verwendet, wobei das Verfahren **dadurch gekennzeichnet ist, dass** es umfasst:
- einen Polymerisierungsschritt des zwischen der ersten Kokille (12) und der zweiten Kokille (29) befindlichen polymerisierbaren Materials, wenn die Vorrichtung in der zweiten Konfiguration ist, so dass durch die Kokillen (12, 29) und das erhärtete Material ein starrer Block ausgebildet wird;
- einen Übergangsschritt von der zweiten Konfiguration in die erste Konfiguration der Vorrichtung; danach
- einen Entnahmeschritt des starren Blocks, wenn die Vorrichtung in der ersten Konfiguration ist.
